# FASCICULE DE BREVET EUROPEEN

(11) **EP 0 561 102 B1**
(45) Date de publication et mention de la délivrance du brevet: **15.10.1997**
(21) Numéro de dépôt: 92870044.2
(22) Date de dépôt: 16.03.1992
(51) Int. Cl.: C08G 63/199, C09D 167/00, C09D 163/00, C09D 5/03

(54) **Polyesters cycloaliphatiques contenant des groupes carboxyle terminaux pour la préparation de peintures en poudre**
Cycloaliphatische Polyester mit Carboxylendgruppen zur Darstellung von Pulverlacken
Cycloaliphatic polyesters with carboxylic acid terminal groups for the preparation of powder coatings

(43) Date de publication de la demande: 22.09.1993
(73) Titulaire: U C B, S.A., 1050 Bruxelles (BE)
(72) Inventeur: Moens, Luc, B-1640 Sint Genesius-Rode (BE); Maetens, Daniel, B-1080 Bruxelles (BE); Loutz, Jean-Marie, B-1160 Bruxelles (BE); Baudour, Michel, B-7387 Angreau, Honnelles (BE)
(74) Mandataire: Dusseldorp, Raymond

(56) Documents cités:
- EP-A- 0 215 740
- FR-A- 2 015 208
- FR-A- 2 390 479
- GB-A- 2 140 440
- US-A- 4 085 159
- US-A- 4 525 504
- PROC. WATER-BORNE, HIGHER-SOLIDS, POWDER COAT. SYMP., 6-8 février 1991, pages 65-77; L.K. JOHNSON et al.: "New polyester intermediates for powder coatings"

## Description

La présente invention se rapporte à des polyesters contenant des groupes carboxyle terminaux, à des compositions thermodurcissables en poudre à base de ces polyesters et de composés époxydés, de même qu'au procédé pour les préparer. Plus particulièrement, l'invention concerne des compositions thermodurcissables en poudre qui donnent des revêtements possédant un ensemble de propriétés remarquables, même lorsque la cuisson est effectuée à basse température.

Les compositions thermodurcissables en poudre sont bien connues dans l'état de la technique et sont largement utilisées comme peintures et vernis pour le revêtement d'objets les plus divers. Les avantages de ces poudres sont nombreux; d'une part le problème des solvants est complètement supprimé, d'autre part les poudres sont utilisées à 100%, vu que seule la poudre en contact direct avec le substrat est retenue par celui-ci, l'excès de poudre étant, en principe, intégralement récupérable et réutilisable. C'est pourquoi ces compositions en poudre sont préférées par rapport aux compositions de revêtement se présentant sous la forme de solutions dans un solvant organique.

Les compositions thermodurcissables en poudre ont déjà trouvé un large débouché dans l'enduction des appareils électroménagers, des meubles de jardin, des bicyclettes, des accessoires de l'industrie automobile, etc.. Elles contiennent généralement un liant organique thermodurcissable, des charges, des pigments, des catalyseurs et des additifs divers pour adapter leur comportement à leur utilisation.

Il existe principalement deux types de compositions thermodurcissables en poudre, d'une part, celles qui contiennent comme liant un mélange de polymères contenant des groupes carboxyle tels qu'un polyester ou un polyacrylate carboxylé et de composés époxydés, principalement l'isocyanurate de triglycidyle et, d'autre part, celles qui contiennent comme liant un mélange de polymères contenant des groupes hydroxyle, le plus souvent un polyester hydroxylé avec des isocyanates bloqués au phénol, au caprolactame, etc..

Les polyesters contenant des groupes carboxyle utilisables pour la préparation de vernis et peintures en poudre ont déjà fait l'objet de nombreuses publications sous la forme d'articles et de brevets. Dans la littérature des brevets on citera notamment les brevets américains 4.085.159 et 4.147.737. Ces polyesters sont habituellement préparés à partir d'acides dicarboxyliques aromatiques, principalement l'acide téréphtalique et isophtalique et éventuellement une faible proportion d'acides dicarboxyliques aliphatiques ou cycloaliphatiques, et à partir de polyols aliphatiques divers comme par exemple l'éthylène glycol, le néopentyl glycol, le 1,6-hexanediol, le triméthylolpropane, etc.. Ces polyesters présentent généralement un indice d'acide de 15 à 100 mg de KOH/g de polyester. Ces polyesters à base d'acides dicarboxyliques aromatiques, lorsqu'ils sont utilisés avec des composés époxydés tel que l'isocyanurate de triglycidyle, fournissent des compositions thermodurcissables donnant des enduits de peinture ou de vernis possédant d'excellentes propriétés tant en ce qui concerne leur aspect qu'en ce qui concerne leurs propriétés mécaniques (résistance au choc, flexibilité, adhérence, etc.).

Tout récemment, on a proposé des polyesters aliphatiques contenant des groupes carboxyle ou hydroxyle terminaux pour la préparation de vernis et peintures en poudre, qui présentent une meilleure résistance aux intempéries que les polyesters préparés à partir d'acides dicarboxyliques aromatiques.

Ainsi, suivant la demande de brevet européen EP-A-487 485 au nom de la demanderesse, on prépare une résine de polyester aliphatique par réaction de l'acide 1,4-cyclohexanedicarboxylique en tant que seul constituant acide, avec un constituant alcoolique qui contient (1) de 12 à 100 équivalents % de bisphénol A hydrogéné et/ou d'un autre diol cycloaliphatique et (2) de 88 à 0 équivalents % d'au moins un glycol ou polyol aliphatique à chaîne droite ou ramifiée. La préparation de ces polyesters tout aliphatiques se fait en un stade par réaction d'un excès molaire du constituant acide par rapport au constituant alcoolique.

Cependant, on a constaté que pour que ces polyesters aliphatiques fournissent des enduits de peinture ayant de bonnes propriétés mécaniques (résistance au choc et flexibilité), il est absolument nécessaire d'effectuer la cuisson à une température de 200°C pendant 20 minutes et d'ajouter à la composition de revêtement une certaine quantité d'un catalyseur de réticulation, par exemple un sel de phosphonium. En effet, à cette température sans l'addition d'un tel catalyseur, ou à une plus faible température de cuisson, par exemple à 180°C même avec addition de catalyseur, il n'est pas possible de réaliser des revêtements ayant de bonnes propriétés mécaniques à partir de ces polyesters aliphatiques. De plus, on a observé que même une augmentation de la quantité de catalyseur de réticulation n'autorise pas un abaissement de la température de cuisson. Par catalyseur de réticulation, on entend ici un composé qui accélère la réaction entre les groupes carboxyle du polyester et le composé époxydé.

Par conséquent, ces polyesters aliphatiques ne donnent satisfaction qu'à la condition de respecter scrupuleusement ces critères (addition de catalyseur de réticulation et durée et température de cuisson). Or, dans la pratique industrielle, il est très difficile de réaliser cette condition de température de cuisson. La moindre variation dans les conditions de fonctionnement du four se répercutera donc inévitablement sur la qualité des revêtements obtenus.

Il serait donc très avantageux de concevoir des polyesters contenant des groupes carboxyle terminaux possédant toutes les propriétés avantageuses des polyesters aliphatiques décrits dans la demande de brevet européen EP-A-487 485, tout en présentant une plus grande souplesse en ce qui concerne les conditions de cuisson requises pour la réticulation des revêtements. C'est ce qui constitue l'objet de la présente invention.

Selon la présente invention, on apporte de nouveaux polyesters contenant des groupes carboxyle terminaux comprenant les produits de réaction de
(a) un polyester aliphatique contenant des groupes hydroxyle terminaux préparé à partir de l'acide 1,4-cyclohexanedicarboxylique comme seul constituant acide et d'un constituant alcoolique comprenant (1) de 10 à 100 équivalents % d'un diol cycloaliphatique et (2) de 90 à 0 équivalents % d'au moins un polyol aliphatique à chaîne droite ou ramifiée ayant de 2 à 12 atomes de carbone, avec
(b) un acide dicarboxylique aliphatique et/ou aromatique ou l'anhydride correspondant.

Les polyesters contenant des groupes carboxyle terminaux conformes à l'invention présentent un indice d'acide de 25 à 70 mg de KOH/g.

La caractéristique essentielle des polyesters contenant des groupes carboxyle terminaux conformes à l'invention qui les distingue des polyesters aliphatiques préparés dans la demande de brevet européen EP-A-487 485 au nom de la demanderesse, est leur préparation en deux stades distincts. Dans le premier stade, on prépare un polyester aliphatique contenant des groupes hydroxyle terminaux à partir de l'acide 1,4-cyclohexanedicarboxylique comme seul acide et d'un diol cycloaliphatique, seul ou en mélange avec des polyols aliphatiques. Ce polyester hydroxylé se compose donc exclusivement de composés (cyclo) aliphatiques, c'est-à-dire qu'il est préparé pratiquement à partir des mêmes matières premières que les polyesters aliphatiques de la demande de brevet européen précitée. Dans le deuxième stade, on fait réagir ce polyester à groupes hydroxyle terminaux avec un acide dicarboxylique aliphatique et/ou aromatique ou l'anhydride correspondant, ce qui provoque un allongement de chaîne et une carboxylation du polyester.

On a observé, de manière inattendue, que par ce procédé particulier en deux stades, on obtient un nouveau polyester contenant des groupes carboxyle terminaux qui, lorsqu'il est utilisé avec un composé époxydé, tel que l'isocyanurate de triglycidyle, fournit des compositions thermodurcissables en poudre donnant des revêtements possédant des propriétés au moins équivalentes à celles des polyesters aliphatiques connus, même lorsque la cuisson est effectuée dans des conditions moins sévères, à des températures plus basses de l'ordre de 150 à 190°C pendant environ 10 minutes, à la condition toutefois d'utiliser un catalyseur de réticulation, ou encore lorsque la cuisson est effectuée à une température de 200°C pendant environ 10 minutes, en l'absence de catalyseur de réticulation.

Une première constatation est que ce mode particulier de préparation du polyester en deux stades, comparativement au procédé en un stade, confère une meilleure souplesse du point de vue des conditions de température de la cuisson des revêtements, étant donné que pour la production des revêtements, on peut utiliser des températures de cuisson plus basses.

Comme les exemples qui suivent le montrent, il n'est pas possible d'obtenir ce résultat avec des polyesters de comparaison préparés en un stade en partant pratiquement des mêmes matières premières. De même, avec les polyesters de la demande de brevet européen 91870185.5 précitée, il n'est pas non plus possible d'obtenir ce résultat.

Il est évident que cette réduction de la température de cuisson est avantageuse économiquement et techniquement, puisqu'elle entraîne une économie d'énergie, d'une part et une qualité plus sûre et plus constante des revêtements finals, d'autre part. Un autre avantage non négligeable qui en résulte est que l'on peut obtenir des revêtements sur des substrats plus sensibles à la chaleur, en élargissant ainsi le domaine d'application de ce type de produits.

Une autre caractéristique avantageuse de l'invention est que les revêtements préparés à partir des compositions contenant les polyesters conformes à l'invention possèdent un ensemble de propriétés remarquables. En effet, ces revêtements présentent à la fois les excellentes propriétés de flexibilité et de résistance au choc des revêtements obtenus à partir des polyesters classiques à base d'acides aromatiques et l'excellente résistance aux intempéries, qui est la caractéristique des revêtements obtenus à partir des polyesters tout aliphatiques, sans devoir procéder à une cuisson à une température très élevée de 200°C. De plus, ces revêtements possèdent une excellente résistance aux atmosphères industrielles polluantes et à la corrosion qui est nettement supérieure à celle des revêtements obtenus à partir d'un polyester de composition identique, mais préparé en un seul stade (exemple 32).

La présente invention se rapporte également au procédé de préparation de ces nouveaux polyesters. Selon ce procédé, on prépare d'abord dans un premier stade un polyester tout aliphatique contenant des groupes hydroxyle terminaux.

Pour la préparation de ce polyester aliphatique contenant des groupes hydroxyle terminaux, on se sert exclusivement de l'acide 1,4-cyclohexanedicarboxylique en tant que constituant acide; en général, cet acide est présent sous forme d'un mélange des isomères cis et trans. Le constituant alcoolique contient de 10 à 100 équivalents % et de préférence de 30 à 70 équivalents % d'un diol cycloaliphatique. Des exemples de ces diols cycloaliphatiques sont le 2,2-[bis(4-hydroxycyclohexyl)]propane (ou bisphénol A hydrogéné), le 1,4-cyclohexanediméthanol, le 1,4-cyclohexanediol, le 2,2,4,4-téraméthyl-1,3-cyclobutanediol, le 4,8-bis(hydroxyméthyl)tricyclo[5.2.1.0^{2,6}]décane (ou tricyclodécanediméthanol) et leurs mélanges. Le constituant alcoolique peut contenir en outre de 0 à 90 équivalents % et de préférence de 30 à 70 équivalents % de polyols aliphatiques à chaîne droite ou ramifiée ayant de 2 à 12 atomes de carbone. Ces polyols peuvent être des glycols ou des polyols tri- ou tétrahydroxylés tels que l'éthylène glycol, le diéthylène glycol, le propylène glycol, le 1,4-butanediol, le 1,6-hexanediol, le néopentyl glycol, le triméthylolpropane, le ditriméthylolpropane, le triméthyloléthane, le pentaérythritol, le 1,3,5-tris(2-hydroxyéthyl)-1,3,5-triazine-2,4,6(1H,3H,5H)-trione (ou tris(2-hydroxyéthyl)-isocyanurate) et leurs mélanges.

Les mélanges de néopentyl glycol et-de polyols aliphatiques tri- et/ou tétrahydroxylés sont particulièrement préférés selon la présente invention; le néopentyl glycol permet d'obtenir une température de transition vitreuse appropriée et facilite l'obtention d'une bonne viscosité à l'état fondu de la poudre, tandis que le polyol tri- ou tétrahydroxylé permet d'obtenir un polyester de fonctionnalité supérieure à deux. Le rapport en équivalents hydroxyle du néopentyl glycol aux équivalents hydroxyle des polyols aliphatiques tri- et/ou tétrahydroxylés est généralement de 0/1 à 30/1.

Le polyester aliphatique contenant des groupes hydroxyle terminaux est préparé selon les procédés conventionnels. On utilise généralement un excès de 7 à 85 équivalents % du constituant alcoolique par rapport à l'acide 1,4-cyclohexanedicarboxylique; on obtient ainsi un polyester dont l'indice d'hydroxyle peut varier entre 30 et 220 mg de KOH/g de polyester.

Selon l'invention, on prépare ensuite dans un deuxième stade un polyester contenant des groupes carboxyle terminaux en faisant réagir le polyester aliphatique contenant des groupes hydroxyle terminaux obtenu au premier stade du procédé avec un acide dicarboxylique aliphatique et/ou aromatique ou l'anhydride correspondant pour obtenir un allongement de chaîne et/ou la carboxylation du polyester. En tant qu'acides (ou anhydrides) utilisés pour la préparation du polyester contenant des groupes carboxyle au deuxième stade, on citera les acides ou anhydrides suivants : l'acide succinique, l'acide glutarique, l'acide adipique, l'acide pimélique, l'acide azélaïque, l'acide maléïque, l'acide fumarique, l'acide isophtalique, l'anhydride succinique, l'anhydride maléïque et leurs mélanges; parmi les acides précités l'acide adipique et l'acide isophtalique sont utilisés de préférence.

On notera qu'il est possible aussi d'utiliser au deuxième stade du procédé un mélange de l'acide dicarboxylique aliphatique et/ou aromatique (ou de l'anhydride correspondant) avec jusqu'à 80 équivalents % (sur la base de l'ensemble des acides et/ou anhydrides) d'un anhydride d'un acide tricarboxylique aromatique tel que l'anhydride triméllitique.

Le polyester contenant des groupes carboxyle terminaux est préparé en utilisant un excès de l'acide dicarboxylique aliphatique et/ou aromatique ou de l'anhydride correspondant par rapport au polyester à groupes hydroxyle terminaux; cet excès est généralement de 20 à 100 équivalents %. On obtient ainsi un polyester contenant des groupes carboxyle terminaux dont l'indice d'acide est de 25 à 70 mg de KOH/g de polyester. Ce polyester présente une fonctionnalité qui est, de préférence, comprise entre 2 et 4.

Les polyesters contenant des groupes carboxyle terminaux conformes à l'invention sont des produits solides qui possèdent un poids moléculaire moyen en nombre compris entre 2.000 et 10.000. A l'état liquide, ces produits présentent une viscosité mesurée à 200°C au moyen d'un viscomètre à cône et plateau (viscosité ICI) allant de 1.000 à 15.000 mPa.s.

En règle générale, les polyesters contenant des groupes carboxyle terminaux de la présente invention contiennent une quantité allant de 50 à 90 moles % d'acide 1,4-cyclohexanedicarboxylique, par rapport à la quantité totale des acides carboxyliques.

Pour la préparation des polyesters, on utilise en général un réacteur classique muni d'un agitateur, d'une entrée de gaz inerte (azote), d'une colonne de distillation reliée à un condenseur refroidi à l'eau et d'un thermomètre connecté à un thermorégulateur.

Les conditions d'estérification utilisées pour la préparation des polyesters sont classiques, à savoir que l'on peut utiliser un catalyseur d'estérification usuel, tel que l'oxyde de dibutylétain, le dilaurate de dibutylétain, le trioctanoate de n-butylétain, l'acide sulfurique ou un acide sulfonique à raison de 0,05 à 0,5% en poids des réactifs, et ajouter éventuellement des stabilisants de la couleur, par exemple des antioxydants phénoliques tel que l'IRGANOX 1010 (CIBA-GEIGY) ou des stabilisants de type phosphonite et phosphite tel que le phosphite de tributyle.

La polyestérification est généralement effectuée à une température que l'on augmente progressivement de 130°C à environ 190 à 230°C, d'abord sous la pression normale, puis sous pression réduite à la fin de chaque stade du procédé, en maintenant ces conditions opératoires jusqu'à obtention d'un polyester présentant l'indice d'hydroxyle et/ou d'acide désiré. Le degré d'estérification est suivi par détermination de la quantité d'eau formée au cours de la réaction et des propriétés du polyester obtenu, par exemple l'indice d'hydroxyle, l'indice d'acide, le poids moléculaire ou la viscosité.

Lorsque la polyestérification est terminée, on ajoute éventuellement au polyester encore à l'état fondu des catalyseurs de réticulation qui facilitent la réaction entre les groupes carboxyles du polyester et les composés époxydés. Ces catalyseurs sont ajoutés dans le but d'accélérer la réticulation de la composition thermodurcissable en poudre lors de sa cuisson. A titre d'exemples de tels catalyseurs, on citera les amines (p.ex. 2-phénylimidazoline), les phosphines (p.ex. triphénylphosphine), les sels d'ammonium (p.ex. bromure de tétrabutylammonium ou chlorure de tétrapropylammonium), et les sels de phosphonium (p.ex. bromure d'éthyltriphénylphosphonium ou chlorure de benzyltriphénylphosphonium). Ces catalyseurs sont nécessaires pour obtenir des revêtements finals possédant des propriétés mécaniques satisfaisantes, lorsque la cuisson est effectuée à des températures inférieures à 200°C, par exemple de 150 à 190°C. Si la cuisson est effectuée à 200°C, ces catalyseurs peuvent être omis. On utilise ces catalyseurs, de préférence, à raison de 0 à 1% en poids par rapport au poids du polyester.

Au terme de la synthèse, le polyester contenant des groupes carboxyle terminaux est coulé en une couche épaisse, on le laisse refroidir et on le broie en grains ayant une dimension moyenne allant d'une fraction de 1 mm à quelques mm.

Les polyesters conformes à l'invention sont destinés à servir principalement comme liants, conjointement avec des composés époxydés, dans la préparation de composition thermodurcissables en poudre utilisables notamment comme vernis et peintures se prêtant à une application suivant la technique de dépôt au moyen d'un pistolet pulvérisateur électrostatique ou tribo-électrique ou suivant la technique de dépôt en lit fluidisé.

C'est pourquoi, la présente invention se rapporte également à des compositions thermodurcissables en poudre comprenant
(a) un polyester contenant des groupes carboxyle terminaux conforme à l'invention et
(b) un composé polyépoxydé.

La présente invention se rapporte en outre à l'utilisation des compositions thermodurcissables conformes à l'invention pour la préparation de vernis et peintures en poudre, ainsi qu'aux vernis et peintures en poudre obtenus à l'aide de ces compositions.

Enfin, elle se rapporte également à un procédé de revêtement d'un article, de préférence métallique, qui est caractérisé par l'application sur ledit article d'une composition thermodurcissable en poudre conforme à l'invention par dépôt par pulvérisation au pistolet électrostatique ou tribo-électrique ou par dépôt en lit fluidisé suivie d'une cuisson du revêtement ainsi obtenu à une température de 150 à 200°C, pendant une durée de 10 à 30 minutes.

Les composés polyépoxydés que l'on peut utiliser pour la préparation des compositions thermodurcissables en poudre conformes à l'invention sont les composés polyépoxydés conventionnellement utilisés dans ce type de compositions. Des composés de ce type sont décrits par exemple dans le brevet américain 4.085.159.

Les composés polyépoxydés préférés sont des produits solides à la température ordinaire, qui contiennent en moyenne, au moins deux groupes époxy par molécule, comme par exemple les résines époxy solides à base de bisphénol A et d'épichlorhydrine, c'est-à-dire l'éther diglycidylique de bisphénol A et ses produits d'addition à poids moléculaire plus élevé. Des exemples de ces résines époxy sont les résines Epikote commercialisées par la société SHELL, les résines Araldite commercialisées par la société CIBA-GEIGY, comme celle vendue sous le nom commercial d'Araldite GT 7004, les résines DER commercialisées par la société DOW CHEMICAL, etc.. Un composé polyépoxydé particulièrement préféré est l'isocyanurate de triglycidyle comme celui vendu par la société CIBA-GEIGY sous le nom commercial d'Araldite PT 810.

Le composé polyépoxydé peut être utilisé à raison de 0,7 à 1,3, de préférence de 0,95 à 1,05 équivalent de groupes époxy par équivalent de groupes carboxyle dans le polyester contenant des groupes carboxyle terminaux. La quantité du composé époxydé varie selon la nature du composé polyépoxydé. Lorsqu'on utilise l'isocyanurate de triglycidyle, les compositions thermodurcissables en poudre contiennent de préférence de 4 à 15 parties en poids de ce composé pour 100 parties en poids de liant c'est-à-dire le polyester et le composé époxydé.

Pour la préparation des compositions thermodurcissables en poudre, on mélange de manière homogène le polyester contenant des groupes carboxyle terminaux, le composé polyépoxydé et les diverses substances auxiliaires utilisées conventionnellement pour la fabrication de peinture et vernis en poudre. Cette homogénéisation est exécutée par exemple en fondant le polyester, le composé polyépoxydé et les diverses substances auxiliaires à une température située dans l'intervalle de 90 à 100°C, de préférence dans une extrudeuse, par exemple une extrudeuse Buss-Ko-Kneter ou une extrudeuse à double vis de type Werner-Pfleiderer ou Baker Perkins. Ensuite, on laisse refroidir l'extrudat, on le broie et on le tamise pour obtenir une poudre dont la dimension des particules est comprise entre 30 et 110 micromètres.

Les substances auxiliaires ajoutées éventuellement aux compositions thermodurcissables conformes à l'invention sont entre autres des composés absorbants les rayons ultraviolets comme le Tinuvin 900 (de CIBA-GEIGY Corp.), des stabilisants à la lumière à base d'amines à empêchement stérique (par exemple le Tinuvin 144 de CIBA-GEIGY Corp.), des antioxydants phénoliques (par exemple l'Irganox 1010 ou l'Irgafos P-EPQ de CIBA-GEIGY) et des stabilisants de type phosphonite ou phosphite. Les compositions conformes à l'invention peuvent en contenir jusqu'à 10Z en poids par rapport au poids du polyester. Une variété de pigments peut également être ajoutée aux compositions thermodurcissables conformes à l'invention. A titre d'exemples de pigments, on citera les oxydes métalliques tels que le dioxyde de titane, l'oxyde de fer, l'oxyde de zinc, etc., les hydroxydes de métaux, les poudres métalliques, les sulfures, les sulfates, les carbonates, les silicates comme par exemple le silicate d'aluminium, le noir de carbone, le talc, les kaolins, les barytes, les bleus de fer, les bleus de plomb, les rouges organiques, les marrons organiques, etc.. On citera encore comme substances auxiliaires des agents régulateurs de fluidité comme le Resiflow PV5 (de WORLEE) ou le Modaflow (de MONSANTO), ou l'Acronal 4F (de BASF), des plastifiants comme le phtalate de dicyclohexyle, le phosphate de triphényle, des agents auxiliaires de broyage, des huiles siccatives, des agents de dégazage tels que la benzoïne et des charges. Ces substances auxiliaires sont utilisées en quantités usuelles, étant entendu que si les compositions thermodurcissables conformes à l'invention sont utilisées comme vernis, on omettra l'addition de substances auxiliaires ayant des propriétés opacifiantes.

Les peintures et vernis en poudre faisant l'objet de la présente invention sont destinés à être appliqués sur l'article à revêtir par les techniques traditionnelles, c'est-à-dire par application au pistolet pulvérisateur électrostatique ou tribo-électrique ou par la technique bien connue du dépôt en lit fluidisé.

Après avoir été appliqués sur l'article concerné, les revêtements déposés sont durcis par cuisson au four à une température de 150 à 200 °C, pendant une durée d'environ 10 à 30 minutes en vue d'obtenir la réticulation complète du revêtement.

Les exemples qui vont suivre illustrent l'invention sans la limiter. Dans ceux-ci, les parties sont en poids, sauf indication contraire.

Dans les tableaux I et II, les différents composés utilisés pour la préparation des polyesters selon l'invention et des polyesters introduits à titre comparatifs, sont désignés par les abréviations suivantes :
- CHDA :: acide 1,4-cyclohexanedicarboxylique
- AIP :: acide isophtalique
- Aad :: acide adipique
- AS :: anhydride succinique
- ATM :: anhydride triméllitique
- BPAH :: bisphénol A hydrogéné
- CHDM :: 1,4-cyclohemnediméthanol
- tCDDM :: tricyclodécanediméthanol
- tMeCBD :: 2,2,4,4-tétraméthyl-1,3-cyclobutanediol
- tHEIC :: tris(2-hydroxyéthyl)-isocyanurate
- NPG :: néopentylglycol
- TMP :: triméthylolpropane
- dTMP :: di-triméthylolpropane
- PE :: pentaérythritol
- TGIC :: isocyanurate de triglycidyle.

Dans ces exemples, lorsqu'un catalyseur de réticulation est utilisé, il s'agit du bromure d'éthyltriphénylphosphonium, et lorsqu'un antioxydant est utilisé, il s'agit de phosphite de tributyle. La température de transition vitreuse (Tg) est déterminée par calorimétrie à balayage différentiel (DSC) avec une élévation de température de 20°C par minute.

### Exemple 1.

### Préparation d'un polyester contenant des groupes carboxyle terminaux en deux stades, avec allongement de chaîne et carboxylation au moyen d'acide isophtalique au 2e stade.

### 1er stade.

Dans un ballon à quatre cols équipé d'un agitateur, d'une colonne de distillation reliée à un condenseur refroidi à l'eau, d'une entrée d'azote et d'un thermomètre connecté à un thermorégulateur, on place 215 parties de bisphénol A hydrogéné, 215 parties de néopentyl glycol, 37 parties de triméthylolpropane et 502 parties d'acide 1,4-cyclohexanedicarboxylique avec 3 parties de trioctanoate de n-butylétain comme catalyseur d'estérification. On chauffe le mélange en atmosphère d'azote et sous agitation jusqu'à une température d'environ 135°C et on distille l'eau formée. On augmente graduellement le chauffage jusqu'à atteindre une température de 225°C. Lorsque la distillation se termine sous la pression atmosphérique, on établit progressivement un vide de 50 mm Hg. On maintient le mélange réactionnel encore pendant deux heures à 225°C et sous une pression de 50 mm Hg. Le polyester contenant des groupes hydroxyle terminaux ainsi obtenu est alors refroidi à 200°C; il présente les caractéristiques suivantes :

| | |
|---|---|
| indice d'hydroxyle | 66 mg de KOH/g |
| indice d'acide | 5 mg de KOH/g. |

### 2e stade.

Au polyester obtenu au premier stade, toujours à 200°C, on ajoute 151 parties d'acide isophtalique. On chauffe le mélange jusqu'à 225°C. Après deux heures de chauffage à 225°C et sous pression atmosphérique, on établit progressivement un vide de 50 mm Hg. Après une heure de chauffage à 225°C et sous un vide de 50 mm Hg, on déverse le polyester alors qu'il est encore à l'état fondu, puis on laisse refroidir. Le polyester contenant des groupes carboxyle terminaux ainsi obtenu présente les caractéristiques suivantes :

| | |
|---|---|
| indice d'acide | 51 mg de KOH/g |
| indice d'hydroxyle | 2 mg de KOH/g |
| viscosité ICI à 200°C | 6.800 mPa.s |
| Tg (DSC) | 52°C |

réactivité à 180°C (DIN 55.990) pour un mélange polyester/TGIC dans un rapport en poids de 90/10 : 240 secondes.

### Exemple 2.

### Préparation d'un polyester contenant des groupes carboxyle terminaux en deux stades, avec allongement de chaîne et carboxylation au moyen d'acide adipique au 2e stade.

### 1er stade.

On prépare un polyester selon le mode opératoire du 1er stade de l'exemple 1, en faisant réagir un mélange de 391 parties de bisphénol A hydrogéné, 130 parties de néopentyl glycol, 22 parties de triméthylolpropane et 474 parties d'acide 1,4-cyclohexanedicarboxylique avec 3 parties de trioctanoate de n-butylétain comme catalyseur d'estérification. Le polyester contenant des groupes hydroxyle terminaux obtenu présente les caractéristique suivantes :

| | |
|---|---|
| indice d'hydroxyle | 51 mg de KOH/g |
| indice d'acide | 3 mg de KOH/g. |

### 2e stade.

On fait réagir le polyester obtenu au premier stade avec 93 parties d'acide adipique. On poursuit le mode opératoire du 2e stade de l'exemple 1 jusqu'à obtention d'un polyester contenant des groupes carboxyle terminaux, qui présente les caractéristiques suivantes :

| | |
|---|---|
| indice d'acide | 34 mg de KOH/g |
| indice d'hydroxyle | 3 mg de KOH/g |
| viscosité ICI à 200°C | 9.550 mPa.s |
| Tg (DSC) | 55°C |
| réactivité à 180°C (DIN 55.990) pour un mélange polyester/TGIC dans un rapport en poids de 93/7 : 450 secondes. | |

### Exemple 3.

On procède comme à l'exemple 2, mais on ajoute au polyester contenant des groupes carboxyle terminaux obtenu en fin de synthèse, lorsqu'il est encore à 200°C, 2 parties de catalyseur de réticulation. La réactivité du polyester ainsi préparé, en mélange avec du TGIC dans un rapport en poids de 93/7, mesurée à 180°C selon la norme DIN 55.990, est de 95 secondes.

### Exemple 4.

### Préparation d'un polyester contenant des groupes carboxyle terminaux en deux stades, avec carboxylation au moyen d'anhydride succinique.

### 1er stade.

Dans le même montage que celui utilisé à l'exemple 1, on introduit 146 parties de néopentyl glycol, 341 parties de bisphénol A hydrogéné, 40 parties de triméthylolpropane et 426 parties d'acide 1,4-cyclohexanedicarboxylique, avec 2 parties de trioctanoate de n-butylétain comme catalyseur d'estérification. On chauffe le mélange en atmosphère d'azote et sous agitation jusqu'à une température de 225°C. Lorsque la distillation s'arrête et que la température en tête de colonne est inférieure à 80°C, on établit progressivement un vide de 50 mm Hg, jusqu'à obtention d'un polyester contenant des groupes hydroxyle terminaux, qui présente les caractéristiques suivantes :

| | |
|---|---|
| indice d'hydroxyle | 55 mg de KOH/g |
| indice d'acide | 5 mg de KOH/g. |

### 2e stade.

On laisse revenir le mélange réactionnel à la température de 180°C et on y ajoute 81 parties d'anhydride succinique. On laisse la réaction se poursuivre pendant 2 heures. Le polyester contenant des groupes carboxyle terminaux ainsi obtenu présente les caractéristiques suivantes :

| | |
|---|---|
| indice d'acide | 53 mg de KOH/g |
| indice d'hydroxyle | 5 mg de KOH/g |
| viscosité ICI à 200 °C | 3.800 mPa.s |
| Tg (DSC) | 52°C |
| réactivité à 180°C (DIN 55.990) pour un mélange polyester/TGIC dans un rapport en poids de 90/10 : 200 secondes. | |

### Exemples 5 à 19.

Adoptant le mode opératoire décrit à l'exemple 1, on a préparé une série d'autres polyesters contenant des groupes carboxyle terminaux (exemples 5 à 11 et 13 à 19). Le polyester contenant des groupes carboxyle terminaux de l'exemple 12 a été préparé selon le mode opératoire de l'exemple 4. Ces différents polyesters sont décrits au tableau I, dans lequel on donne successivement la composition du polyester contenant des groupes hydroxyle terminaux préparé dans le premier stade, la quantité éventuellement utilisée de trioctanoate de n-butylétain comme catalyseur d'estérification, la quantité éventuellement ajoutée d'antioxydant, l'indice d'hydroxyle (IOH) et d'acide (IA) du polyester hydroxylé obtenu, la composition du polyester contenant des groupes carboxyle terminaux préparé dans le 2e stade, ainsi que la quantité de catalyseur de réticulation éventuellement ajoutée en fin de synthèse, le polyester étant encore à l'état fondu, l'indice d'acide (IA) et d'hydroxyle (IOH), la viscosité ICI à 200°C en mPa.s, la couleur dans l'échelle de Gardner, la température de transition vitreuse (Tg déterminée par DSC) et la réactivité à 180°C (DIN 55.990) du polyester final, cette dernière propriété étant mesurée pour un mélange polyester/TGIC dans un rapport en poids de 93/7 lorsque le polyester présente un indice d'acide d'environ 30 mg de KOH/g, et dans un rapport en poids de 90/10 lorsque le polyester présente un indice d'acide d'environ 50 mg de KOH/g.

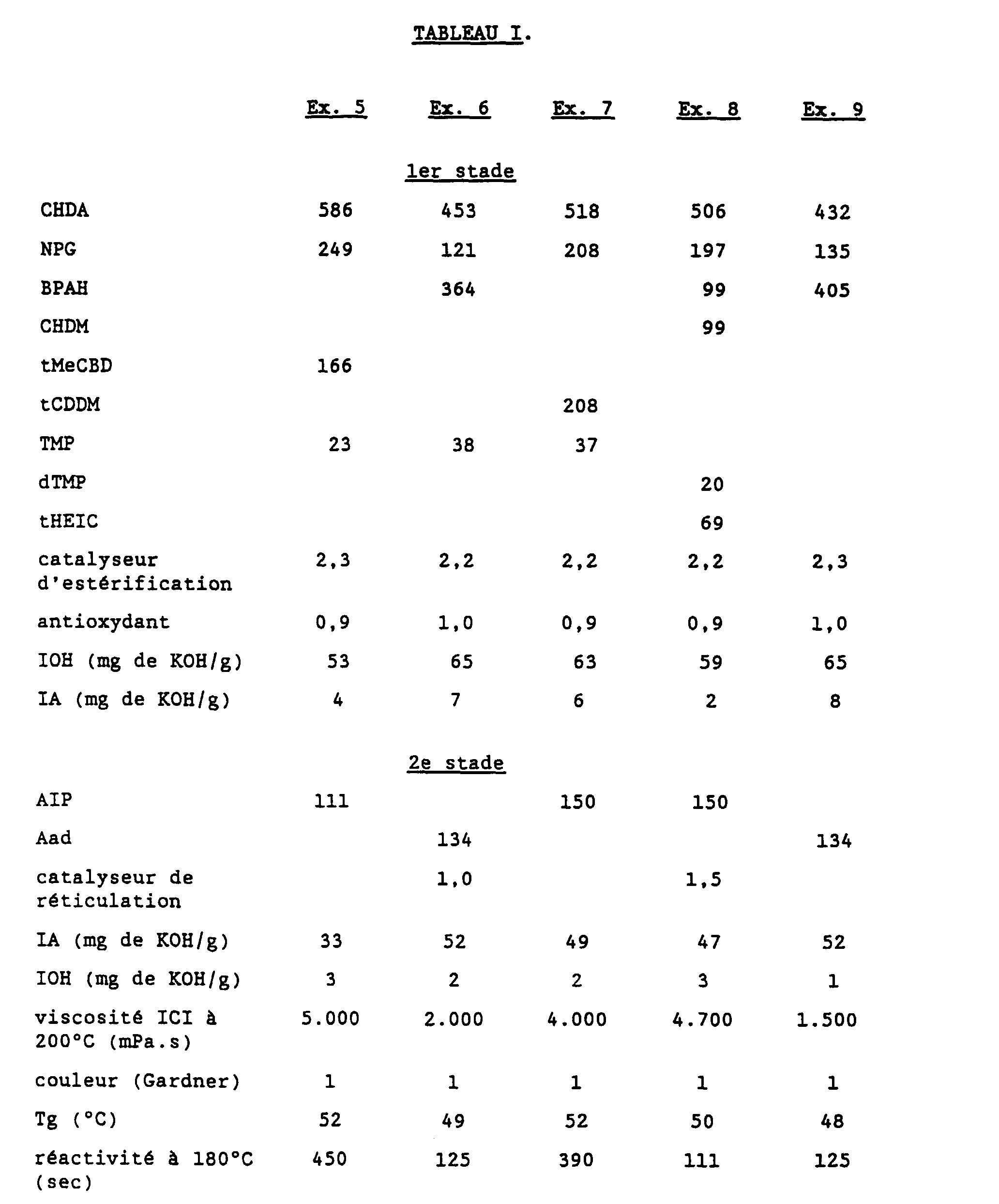

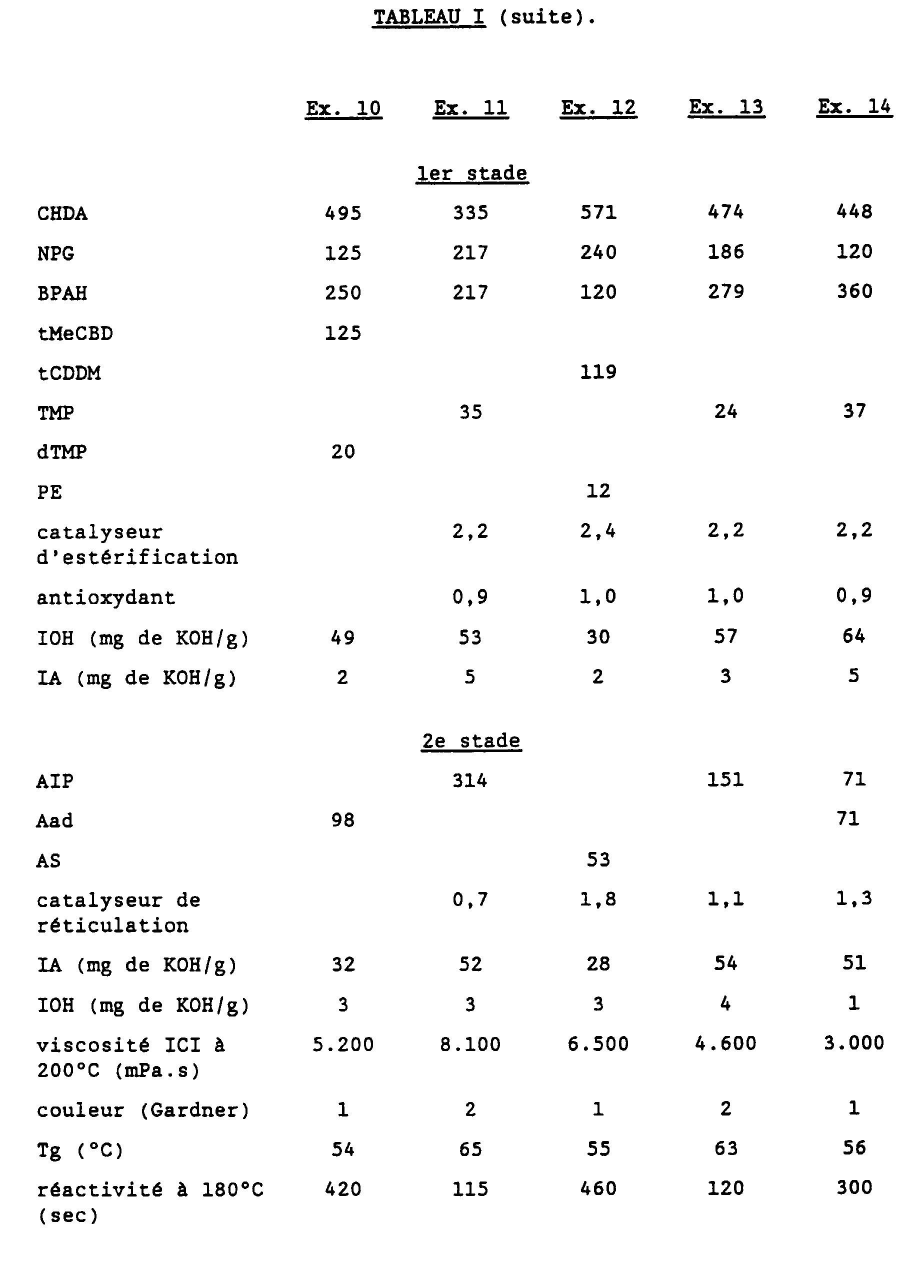

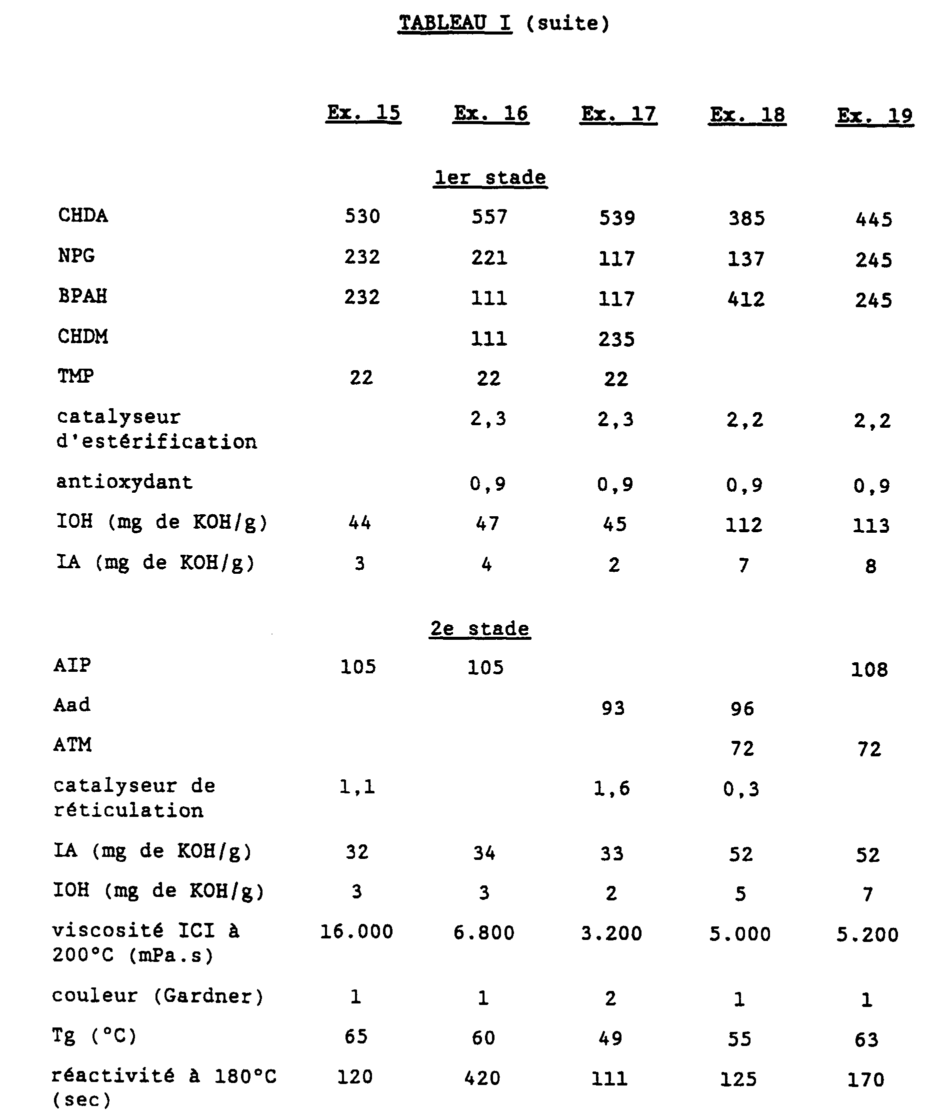

### Exemple 20 (comparatif).

### Préparation d'un polyester contenant des groupes carboxyle terminaux en un seul stade.

Dans le même montage que celui utilisé à l'exemple 1, on place 215 parties de bisphénol A hydrogéné, 215 parties de néopentyl glycol, 20 parties de triméthylolpropane, 500 parties d'acide 1,4-cyclohexanedicarboxylique et 151 parties d'acide isophtalique, avec 3 parties de trioctanoate de n-butylétain comme catalyseur. On chauffe le mélange en atmosphère d'azote et sous agitation jusqu'à une température de 225°C. Lorsque la distillation s'arrête et que la température en tête de colonne est inférieure à 80°C, on établit progressivement un vide de 50 mm Hg. Après deux heures à 225°C et sous la pression de 50 mm Hg, on ramène la pression à la valeur atmosphérique et on déverse le polyester alors qu'il est encore à l'état fondu, puis on laisse refroidir. Le polyester contenant des groupes carboxyle terminaux ainsi obtenu présente les caractéristiques suivantes :

| | |
|---|---|
| indice d'acide | 50 mg de KOH/g |
| indice d'hydroxyle | 3 mg de KOH/g |
| viscosité ICI à 200°C | 7.000 mPa.s |
| Tg (DSC) | 55°C |
| réactivité à 180°C (DIN 55.990) pour un mélange polyester/TGIC dans un rapport en poids de 90/10 : 340 secondes. | |

### Exemple 21 (comparatif).

On procède comme à l'exemple 20, mais on ajoute au polyester contenant des groupes carboxyle terminaux obtenu en fin de synthèse, lorsqu'il est encore à 200°C, 1 partie de catalyseur de réticulation. La réactivité du polyester ainsi obtenu, mesurée comme à l'exemple 20, est de 115 secondes.

### Exemples 22 à 29 (comparatifs).

Selon le mode opératoire de l'exemple 20, on a préparé, en un stade, 8 autres polyesters contenant des groupes carboxyle terminaux et qui sont introduits à titre comparatif.

Au tableau II, on indique successivement la composition du polyester contenant des groupes carboxyle terminaux préparé, la quantité de trioctanoate de n-butylétain utilisée comme catalyseur d'estérification, la quantité d'antioxydant ajoutée, la quantité de catalyseur de réticulation éventuellement ajoutée en fin de synthèse, le polyester étant encore à l'état fondu, l'indice d'acide (IA) et d'hydroxyle (IOH), la viscosité ICI à 200°C en mPa.s, la couleur dans l'échelle de Gardner, la température de transition vitreuse (Tg, déterminée par DSC) et la réactivité à 180°C (DIN 55.990) du polyester, cette dernière propriété étant mesurée pour un mélange polyester/TGIC dans un rapport en poids de 93/7 lorsque le polyester présente un indice d'acide d'environ 30 mg de KOH/g, et dans un rapport en poids de 90/10 lorsque le polyester présente un indice d'acide d'environ 50 mg de KOH/g.

Dans les exemples 28 et 29, les polyesters contiennent exclusivement de l'acide 1,4-cyclohexanedicarboxylique en tant que constituant acide. La composition de ces polyesters contenant des groupes carboxyle terminaux correspond à celle des polyesters aliphatiques décrite dans la demande de brevet européen 91870185.5 au nom de la demanderesse.

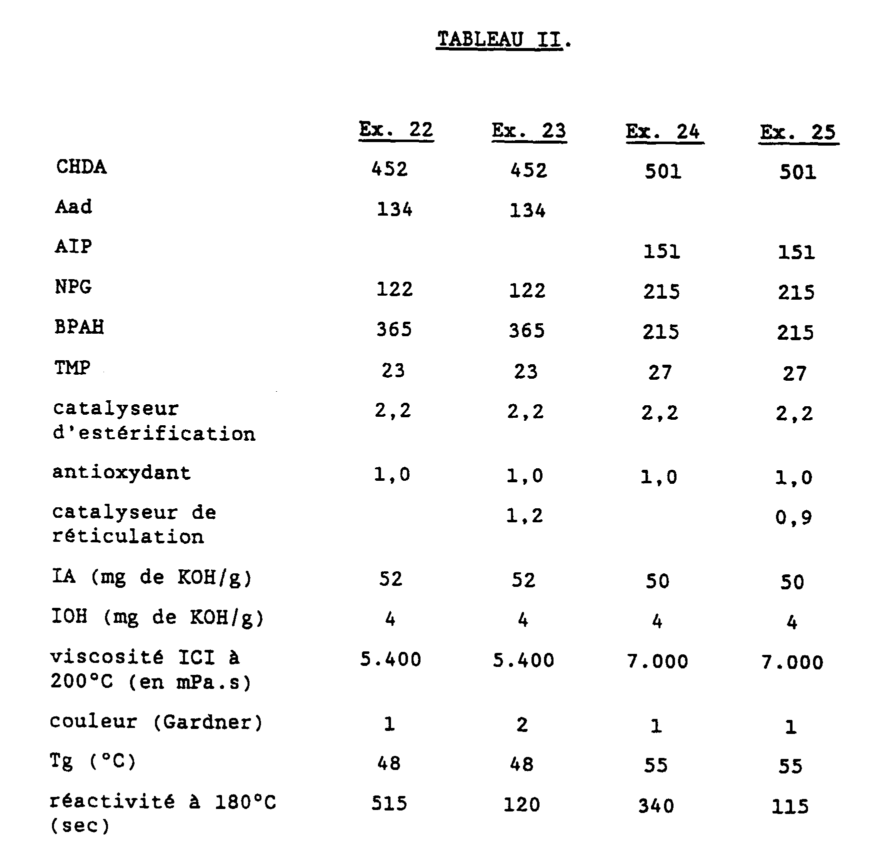

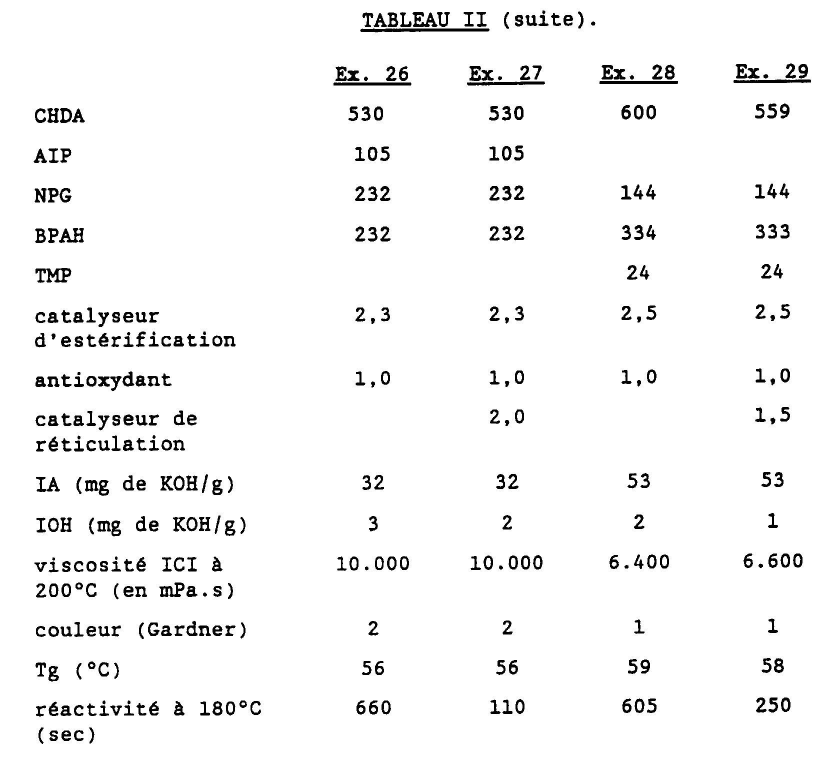

### Exemple 30.

### Préparation de compositions thermodurcissables en poudre et caractéristiques des revêtements obtenus avec celles-ci .

A partir des polyesters conformes à l'invention obtenus dans les exemples 1 à 19 et des polyesters non conformes à l'invention obtenus dans les exemples 20 à 29, on prépare des poudres pigmentées utilisables pour la production de revêtements par projection au pistolet pulvérisateur électrostatique. Pour les polyesters dont l'indice d'acide est de 30 mg de KOH/g, on utilise le polyester et l'isocyanurate de triglycidyle comme agent de réticulation dans un rapport en poids de 93/7; une composition type est la suivante :

| | |
|---|---|
| polyester | 558 parties |
| isocyanurate de triglycidyle (Araldite PT810 de CIBA-GEIGY) | 42 parties |
| dioxyde de titane (Kronos CL2310) | 400 parties |
| agent régulateur de fluidité (Résiflow PV5 de WORLEE) | 10 parties |
| agent de dégazage (benzoïne de BASF) | 3,5 parties. |

Pour les polyesters dont l'indice d'acide est de 50 mg de KOH/g, on utilise le polyester et l'isocyanurate de triglycidyle comme agent de réticulation dans un rapport en poids de 90/10; une composition type est la suivante :

| | |
|---|---|
| polyester | 540 parties |
| isocyanurate de triglycidyle (Araldite PT810 de CIBA-GEIGY) | 60 parties |
| dioxyde de titane (Kronos CL2310) | 400 parties |
| agent régulateur de fluidité (Résiflow PV5 de WORLEE) | 10 parties |
| agent de dégazage (benzoïne de BASF) | 3,5 parties. |

On prépare ces poudres par mélange et homogénéisation des divers ingrédients dans une extrudeuse à double vis Baker-Perkins, à une température de 100°C. Après refroidissement, le mélange est broyé dans un broyeur à disques dentés et tamisé pour fournir des particules dont la dimension varie de 10 à 110 micromètres.

Les poudres ainsi obtenues sont appliquées au pistolet pulvérisateur électrostatique sur des panneaux en acier laminé à froid, non traités, en une épaisseur de film de 50 à 80 micromètres. Les enduits déposés subissent ensuite une cuisson à une température soit de 200°C, soit de 180°C, soit encore de 160°C, pendant une durée de 10 minutes. On soumet les revêtements durcis ainsi obtenus aux tests classiques. Les résultats obtenus sont reportés dans le tableau III pour les polyesters des exemples 1 à 19 conformes à l'invention et dans le tableau IV pour les polyesters des exemples 20 à 29 non conformes à l'invention.

Dans les tableaux III et IV :
la 1ère colonne donne le n° de l'exemple de préparation du polyester utilisé dans la formulation testée,
la 2e colonne donne le rapport en poids entre le polyester et l'isocyanurate de triglycidyle,
la 3e colonne le pourcentage en poids de catalyseur de réticulation éventuellement présent dans le polyester,
la 4e colonne la température de cuisson en °C (température réelle de l'objet à revêtir),
la 5e colonne la valeur du brillant sous un angle de 60°, en %, selon la norme ASTM D523,
la 6e colonne le comportement du revêtement au pliage sur un mandrin conique de 3 mm, selon la norme ASTM D522,
la 7e colonne la valeur de la résistance au choc inverse, en kg.cm, selon la norme ASTM D2794,
la 8e colonne la valeur de la résistance au choc direct, en kg.cm, selon la norme ASTM D2794,
la 9e colonne la valeur obtenue dans l'essai de l'emboutissage Erichsen, selon la norme ISO 1520.

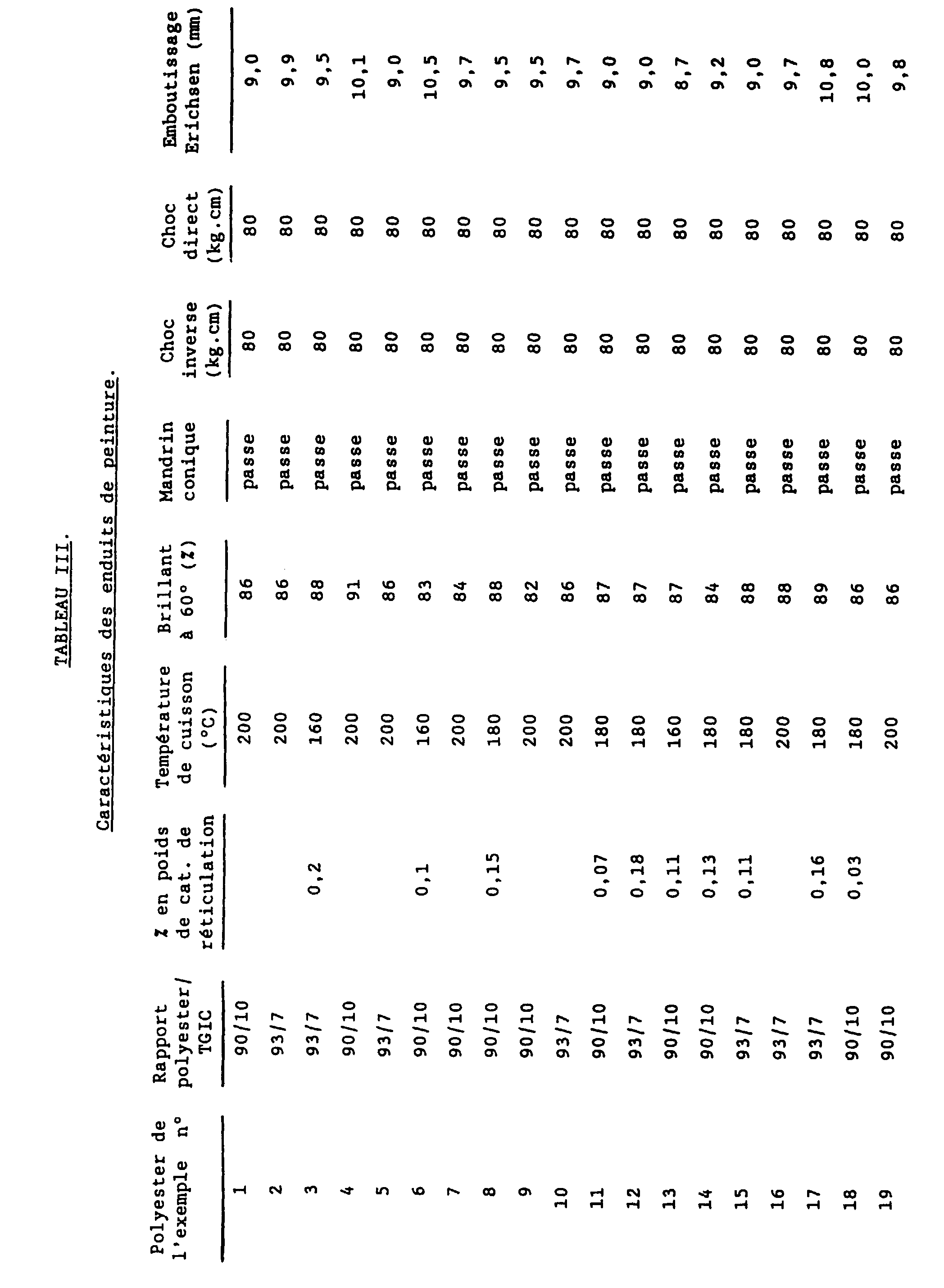

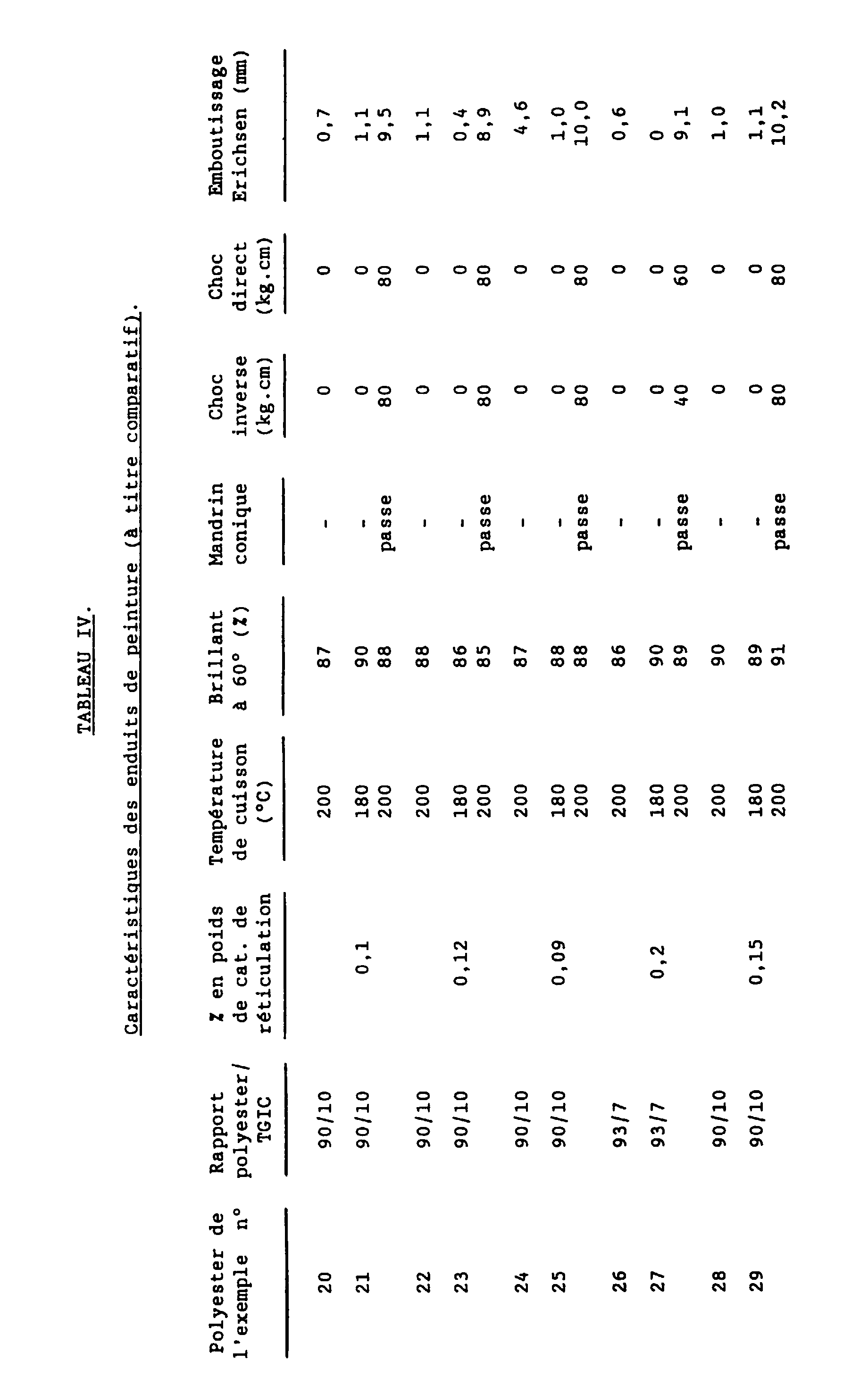

Le tableau III illustre très clairement que les compositions en poudre conformes à l'invention donnent des revêtements présentant d'excellentes propriétés mécaniques et de brillance comparables à celles obtenues avec les compositions en poudre préparées à partir des polyesters classiques de l'état de la technique à base d'acides aromatiques. On voit également que ces propriétés avantageuses peuvent être obtenues en dépit du fait que la cuisson est effectuée à basse température, par exemple à 160°C (exemples 3, 6 et 13) ou à 180°C (exemples 8, 11, 12, 14, 15, 17 et 18), à condition toutefois d'ajouter une faible quantité d'un catalyseur de réticulation. On constate, par ailleurs, que ces excellentes propriétés peuvent aussi être obtenues sans l'addition de catalyseur de réticulation, à condition toutefois d'effectuer la cuisson à 200°C.

D'autre part, dans le tableau IV, on met en évidence que le polyester doit obligatoirement être préparé en deux stades. En effet, lorsque le polyester est préparé en un stade en partant pratiquement des mêmes matières premières (exemples 20 à 27) ou encore conformément à la demande de brevet européen 91870185.5 au nom de la demanderesse (exemples 28 et 29), on voit qu'on ne peut obtenir de bonnes propriétés mécaniques (flexibilité et résistance au choc) qu'à la condition d'ajouter toujours une certaine quantité d'un catalyseur de réticulation et d'effectuer en outre la cuisson des revêtements à une température de 200°C (exemples 21, 23, 25, 27 et 29).

### Exemple 31. Résistance aux intempéries des revêtements.

Les mesures de résistance aux intempéries ont été effectuées dans un environnement très sévère, c'est-à-dire au moyen d'un appareil QUV de mesure de vieillissement accéléré (de la Q Panel Co) dans lequel on soumet les échantillons enduits à des effets intermittents de condensation (4 heures à 40°C) aussi bien qu'à des effets de détérioration dus à la lumière simulés par des lampes UV fluorescentes (lampes UVB-313; 8 heures à 60°C).

Dans le tableau V, on donne pour les revêtements obtenus avec le polyester de l'exemple 3 conforme à l'invention et avec le polyester de l'exemple 21 non conforme à l'invention, les valeurs du brillant mesurées sous un angle de 60° selon la norme ASTM D523, pour 70 jours successifs à 2 cycles par 24 heures. On y inclut à titre comparatif également un polyester du commerce à base d'acides aromatiques qui ne fait pas partie de l'invention. Ce polyester est préparé de manière conventionnelle en deux stades; on fait réagir d'abord 572 parties d'acide téréphtalique, 30 parties d'acide adipique et 422 parties de néopentyl glycol, en présence de 2,2 parties d'oxyde de dibutylétain comme catalyseur d'estérification et de 0,9 partie d'antioxydant; on obtient ainsi un polyester contenant des groupes hydroxyle terminaux dont l'indice d'hydroxyle est de 50 mg de KOH/g; ensuite, on estérifie ce polyester avec 120 parties d'acide isophtalique pour former un polyester contenant des groupes carboxyle terminaux et on y ajoute 0,9 partie de catalyseur de réticulation; le polyester final présente alors un indice d'acide de 35 mg de KOH/g.

Les revêtements testés ont été préparés comme décrits à l'exemple 30 (formulation 93/7 pour le polyester du commerce). Temps de cuisson :

| | |
|---|---|
| polyester de l'exemple 3 | 10 minutes à 160°C, |
| polyester de l'exemple 21 | 10 minutes à 200°C, |
| polyester du commerce à base d'acides aromatiques | 10 minutes à 200°C. |

**TABLEAU V.**

| Variation du brillant à 60° au cours du temps. | | | |
|---|---|---|---|
| | Compositions. | | |
| Nombre de jours | Polyester de l'exemple 3 | Polyester de l'exemple 21 (1) | Polyester aromatique (1) |
| 0 | 94 | 92 | 95 |
| 7 | 92 | 91 | 100 |
| 14 | 97 | 93 | 59 |
| 21 | 100 | 99 | 62 |
| 28 | 97 | 100 | 55 |
| 35 | 82 | 87 | 47 |
| 42 | 57 | 65 | 50 |
| 49 | 53 | 60 | |
| 56 | 67 | 59 | |
| 63 | 58 | 50 | |
| 70 | 50 | 47 | |

| | | | |
|---|---|---|---|
| (1) polyester utilisé à titre comparatif | | | |

Les résultats du tableau V montrent que le polyester de l'exemple 3 conforme à l'invention fournit des revêtements dont les propriétés de résistance aux intempéries sont remarquables et largement supérieures à celles obtenues avec un polyester du commerce essentiellement constitué d'acides aromatiques. On notera en outre que l'excellent comportement des revêtements conformes à l'invention vis-à-vis des intempéries est obtenu pour une température de cuisson beaucoup plus basse, puisqu'elle n'est que de 160°C (au lieu de 200°C pour les revêtements de comparaison).

### Exemple 32. Résistance aux atmosphères industrielles polluantes.

Cet essai de résistance a été conduit dans une atmosphère humide contenant du dioxyde de soufre selon la norme DIN 50018. Dans cet essai, on compare les revêtements obtenus avec une poudre formulée à partir du polyester décrit à l'exemple 1 (conforme à l'invention) avec ceux obtenus avec les poudres formulées respectivement à partir du polyester de l'exemple 20 préparé en un stade et à partir du polyester du commerce à base d'acides aromatiques (non conformes à l'invention), dont la composition est décrite à l'exemple 31.

Ces trois polyesters ont été formulés en une peinture ayant la composition suivante :

| | |
|---|---|
| polyester | 604 parties |
| isocyanurate de triglycidyle (Araldite PT810 de CIBA-GEIGY) | 66 parties |
| dioxyde de titane (Kronos 2160 de KRONOS) | 9 parties |
| Jaune sicomin L1523 (BASF) | 126 parties |
| Bleu héliogène (BASF) | 18 parties |
| Flammrust 101 (DEGUSSA) | 6 parties |
| sulfate de baryum (blanc fixe N de SACHTLEBEN) | 83 parties |
| Durcal 5 (OMYA) | 88,5 parties |
| agent régulateur de fluidité (Résiflow PV5 de WORLEE) | 10 parties |
| agent de dégazage (benzoïne de BASF) | 3,5 parties |

On prépare les compositions en poudre selon la méthode décrite à l'exemple 30. Après l'application sur les objets à revêtir dans les mêmes conditions qu'à l'exemple 30, les enduits déposés subissent une cuisson à 200°C pendant 10 minutes, l'épaisseur de film variant de 50 à 80 micromètres.

Les changements dus à l'hydrolyse en environnement acide sont exprimés par la variation du paramètre b*, indiquant la teinte jaune selon l'échelle CIE L, a*, b*. Ces valeurs ont été mesurées en utilisant un spectrophotomètre COLORQUEST.

Les résultats obtenus dans cet essai sont reportés dans le tableau VI. Ce tableau montre que la composition en poudre contenant le polyester de l'exemple 1 conforme à l'invention, donne des revêtements dont la résistance aux atmosphères industrielles polluantes est nettement supérieure à celle des revêtements correspondants obtenus à partir du polyester de l'exemple 20 (comparatif) préparé en un seul stade.

Le tableau VI montre en outre que cette résistance est pratiquement égale à la résistance qu'offrent les revêtements obtenus avec la composition en poudre contenant le polyester du commerce à base d'acides aromatiques.

Ce test selon DIN 50018 a aussi été effectué sur des revêtements marqués par la croix de St André. La corrosion filiforme reste dans les limites des cahiers des charges des types QUALICOAT et GSB, pour la composition en poudre contenant le polyester de l'exemple 1 conforme à l'invention.

**TABLEAU VI.**

| Résistance aux atmosphères industrielles polluantes. | | | |
|---|---|---|---|
| | Compositions | | |
| Nombre de cycles | Polyester de l'exemple 1 Δb* | Polyester de l'exemple 20 (1) Δb* | Polyester aromatique (1) Δb* |
| 0 | 0 | 0 | 0 |
| 1 | 0,23 | 1,23 | 0 |
| 2 | 0,69 | 2,05 | 0,60 |
| 3 | 0,91 | 3,57 | 1,47 |
| 4 | 1,30 | 4,74 | 1,35 |
| 5 | 1,57 | 4,82 | 1,47 |
| 6 | 2,01 | 6,06 | 1,90 |
| 7 | 2,40 | 7,11 | 2,15 |
| 8 | 2,43 | 8,22 | 2,34 |
| 9 | 2,82 | 8,82 | 2,76 |
| 10 | 3,01 | 8,83 | 2,95 |
| 11 | 3,38 | 8,35 | 3,29 |
| 12 | 4,64 | 8,87 | 3,74 |
| 13 | 4,01 | 10,25 | 4,01 |
| 14 | 4,45 | 11,36 | 4,23 |
| 15 | 4,14 | 13,52 | 4,44 |
| 16 | 4,83 | | 4,68 |
| 17 | 5,01 | | 4,91 |
| 18 | 5,55 | | 5,30 |
| 19 | 6,10 | | 5,80 |
| 20 | 6,69 | | 6,30 |
| 21 | 6,82 | | 6,54 |
| 22 | 7,15 | | 6,91 |
| 23 | 7,74 | | 7,35 |
| 24 | 8,20 | | 7,68 |

| | | | |
|---|---|---|---|
| (1) polyester utilisé à titre comparatif | | | |

## Revendications

1. Polyesters contenant des groupes carboxyle terminaux comprenant les produits de réaction de
(a) un polyester aliphatique contenant des groupes hydroxyle terminaux préparé à partir de l'acide 1,4-cyclohexanedicarboxylique comme seul constituant acide et d'un constituant alcoolique comprenant (1) de 10 à 100 équivalents % d'un diol cycloaliphatique et (2) de 90 à 0 équivalents % d'au moins un polyol aliphatique à chaîne droite ou ramifiée ayant de 2 à 12 atomes de carbone, avec
(b) un acide dicarboxylique aliphatique et/ou aromatique ou l'anhydride correspondant.

2. Polyesters selon la revendication 1, caractérisés en ce que le polyester aliphatique contenant des groupes hydroxyle terminaux (a) présente un indice d'hydroxyle compris entre 30 et 220 mg de KOH/g et une fonctionalité comprise entre 2 et 3.

3. Polyesters selon la revendication 1 ou 2, caractérisés en ce que le diol cycloaliphatique (1) représente 30 à 70 équivalents % du constituant alcoolique.

4. Polyesters selon l'une quelconque des revendications 1 à 3, caractérisés en ce que le diol cycloaliphatique (1) est choisi parmi le bisphénol A hydrogéné, le 1,4-cyclohexanediméthanol, le 1,4-cyclohexanediol, le 2,2,4,4-tétraméthyl-1,3-cyclobutanediol, le 4,8-bis(hydroxyméthyl)tricyclo[5.2.1.0 ^{2,6}]décane et leurs mélanges.

5. Polyesters selon l'une quelconque des revendications 1 à 4, caractérisés en ce que le polyol aliphatique (2) représente 30 à 70 équivalents % du constituant alcoolique.

6. Polyesters selon l'une quelconque des revendications 1 à 5, caractérisés en ce que le polyol aliphatique (2) est choisi parmi l'éthylène glycol, le diéthylène glycol, le propylène glycol, le 1,4-butanediol, le 1,6-hexanediol, le néopentyl glycol, le triméthylolpropane, le ditriméthylolpropane, le triméthyloléthane, le pentaérythritol, la 1,3,5-tris(2-hydroxyéthyl)-1,3,5-triazine-2,4,6(1H,3H,5H)-trione et leurs mélanges.

7. Polyesters selon l'une quelconque des revendications 1 à 6, caractérisés en ce que l'acide dicarboxylique ou l'anhydride correspondant (b) est choisi parmi l'acide succinique, l'acide glutarique, l'acide adipique, l'acide pimélique, l'acide azélaïque, l'acide maléïque, l'acide fumarique, l'acide isophtalique, l'anhydride succinique, l'anhydride maléïque et leurs mélanges.

8. Polyesters selon la revendication 7, caractérisés en ce que l'acide dicarboxylique (b) est choisi parmi l'acide adipique et l'acide isophtalique.

9. Polyesters selon l'une quelconque des revendications 1 à 8, caractérisés en ce qu'ils présentent un indice d'acide de 25 à 70 mg de KOH/g et une fonctionalité comprise entre 2 et 4.

10. Polyesters selon l'une quelconque des revendications 1 à 9, caractérisés en ce qu'ils possèdent un poids moléculaire moyen en nombre compris entre 2.000 et 10.000.

11. Procédé de préparation de polyesters contenant des groupes carboxyle terminaux selon la revendication 1, caractérisé en ce que
(a) on prépare d'abord un polyester aliphatique contenant des groupes hydroxyle terminaux à partir de l'acide 1,4-cyclohexanedicarboxylique et d'un constituant alcoolique comprenant (1) de 10 à 100 équivalents % d'un diol cycloaliphatique et (2) de 90 à 0 équivalents % d'au moins un polyol aliphatique à chaîne droite ou ramifiée ayant de 2 à 12 atomes de carbone, et
(b) on fait réagir ensuite le polyester contenant des groupes hydroxyle terminaux préparé en (a) avec un acide dicarboxylique aliphatique et/ou aromatique ou l'anhydride correspondant.

12. Compositions thermodurcissables en poudre caractérisées en ce qu'elles comprennent
(a) un polyester contenant des groupes carboxyle terminaux tel que défini dans l'une quelconque des revendications 1 à 10, et
(b) un composé polyépoxydé.

13. Compositions selon la revendication 12, caractérisées en ce que le composé polyépoxydé est un composé monomère solide ou une résine polymère solide à la température ordinaire, contenant en moyenne au moins deux groupes époxy.

14. Compositions selon l'une quelconque des revendications 12 et 13, caractérisées en ce que le composé polyépoxydé est l'isocyanurate de triglycidyle.

15. Compositions selon l'une quelconque des revendications 12 à 14, caractérisées en ce qu'on utilise le composé polyépoxydé à raison de 0,7 à 1,3, de préférence de 0,95 à 1,05 équivalent de groupes époxy par équivalent de groupes carboxyle dans le polyester contenant des groupes carboxyle terminaux.

16. Compositions selon l'une quelconque des revendications 12 à 15, caractérisées en ce qu'elles contiennent en outre jusqu'à 1% en poids par rapport au poids du polyester d'un catalyseur de réticulation choisi parmi les amines, les phosphines, les sels d'ammonium et les sels de phosphonium, de préférence le bromure d'éthyltriphényl-phosphonium.

17. Compositions selon l'une quelconque des revendications 12 à 16, caractérisées en ce qu'elles contiennent jusqu'à 10% en poids par rapport au poids du polyester d'au moins un stabilisant choisi parmi les composés absorbants les rayons ultraviolets, les amines à empêchement stérique, les antioxydants phénoliques et les composés de type phosphonite ou phosphite.

18. Procédé de revêtement d'un article, de préférence métallique, caractérisé en ce qu'on applique sur ledit article une composition thermodurcissable en poudre selon l'une quelconque des revendications 12 à 17, par dépôt par pulvérisation au pistolet électrostatique ou tribo-électrique ou par dépôt en lit fluidisé et en ce qu'on fait subir au revêtement ainsi obtenu une cuisson à une température de 150 à 200°C, pendant une durée d'environ 10 à 30 minutes.

19. Articles revêtus entièrement ou partiellement par le procédé selon la revendication 18.

## Patentansprüche

1. Polyester mit endständigen Carboxylgruppen, die die Produkte der Reaktion von
(a) einem aliphatischen Polyester mit endständigen Hydroxylgruppen, der aus 1,4-Cyclohexandicarbonsäure als einzigem Säurebestandteil und einem alkoholischen Bestandteil, der (1) 10 bis 100 Äquivalent-% eines cycloaliphatischen Diols und (2) 90 bis 0 Äquivalent-% wenigstens eines aliphatischen Polyols mit gerader oder verzweigter Kette, das 2 bis 12 Kohlenstoffatome aufweist, hergestellt ist, mit
(b) einer aliphatischen und/oder aromatischen Dicarbonsäure oder dem entsprechenden Anhydrid
umfassen.

2. Polyester gemäß Anspruch 1, dadurch gekennzeichnet, daß der aliphatische Polyester (a) mit endständigen Hydroxylgruppen eine Hydroxylzahl zwischen 30 und 220 mg KOH/g und eine Funktionalität zwischen 2 und 3 aufweist.

3. Polyester gemäß Anspruch 1 oder 2, dadurch gekennzeichnet, daß das cycloaliphatische Diol (1) 30 bis 70 Äquivalent-% des alkoholischen Bestandteils darstellt.

4. Polyester gemäß einem der Ansprüche 1 bis 3, dadurch gekennzeichnet, daß das cycloaliphatische Diol (1) unter hydriertem Bisphenol A, 1,4-Cyclohexandimethanol, 1,4-Cyclohexandiol, 2,2,4,4-Tetramethyl-1,3-cydobutandiol, 4,8-Bis-(hydroxymethyl)tricyclo[5.2,1.0^{2,6}]dekan und deren Gemischen ausgewählt ist.

5. Polyester gemäß einem der Ansprüche 1 bis 4, dadurch gekennzeichnet, daß das aliphatische Polyol (2) 30 bis 70 Äquivalent-% des alkoholischen Bestandteils darstellt.

6. Polyester gemäß einem der Ansprüche 1 bis 5, dadurch gekennzeichnet, daß das aliphatische Polyol (2) unter Ethylenglykol, Diethylenglykol, Propylenglykol, 1,4-Butandiol, 1,6-Hexandiol, Neopentylglykol, Trimethylolpropan, Ditrimethylolpropan, Trimethylolethan, Pentaerythritol, 1,3,5-Tris(2-hydroxyethyl)-1,3,5-triazin-2,4,6(1H,3H,5H)-trion und deren Gemischen ausgewählt ist.

7. Polyester gemäß einem der Ansprüche 1 bis 6, dadurch gekennzeichnet, daß die Dicarbonsäure oder das entsprechende Anhydrid (b) unter Bernsteinsäure, Glutarsäure, Adipinsäure, Pimelinsäure, Azelainsäure, Maleinsäure, Fumarsäure, Isophthalsäure, Bemsteinsäureanhydrid, Maleinsäureanhydrid und deren Gemischen ausgewählt ist.

8. Polyester gemäß Anspruch 7, dadurch gekennzeichnet, daß die Dicarbonsäure (b) unter Adipinsäure und Isophthalsäure ausgewählt ist.

9. Polyester gemäß einem der Ansprüche 1 bis 8, dadurch gekennzeichnet, daß sie eine Säurezahl von 25 bis 70 mg KOH/g und eine Funktionalität zwischen 2 und 4 aufweisen.

10. Polyester gemäß einem der Ansprüche 1 bis 9, dadurch gekennzeichnet, daß sie ein Zahlenmittel des Molekulargewichts zwischen 2000 und 10 000 besitzen.

11. Verfahren zur Herstellung von Polyestern mit endständigen Carboxylgruppen gemäß Anspruch 1, dadurch gekennzeichnet, daß
(a) man zuerst einen aliphatischen Polyester mit endständigen Hydroxylgruppen aus 1,4-Cyclohexandicarbonsäure und einem alkoholischen Bestandteil, der (1)10 bis 100 Äquivalent-% eines cycloaliphatischen Diols und (2) 90 bis 0 Äquivalent-% wenigstens eines aliphatischen Polyols mit gerader oder verzweigter Kette, das 2 bis 12 Kohlenstoffatome aufweist, umfaßt, herstellt, und
(b) man dann den Polyester mit endständigen Hydroxylgruppen, der in (a) hergestellt wurde, mit einer aliphatischen und/oder aromatischen Dicarbonsäure oder dem entsprechenden Anhydrid umsetzt.

12. Pulverförmige warmhärtbare Zusammensetzungen, dadurch gekennzeichnet, daß sie
(a) einen Polyester mit endständigen Carboxylgruppen, wie in einem der Ansprüche 1 bis 10 definiert, und
(b) eine Polyepoxidverbindung
umfassen.

13. Zusammensetzungen gemäß Anspruch 12, dadurch gekennzeichnet, daß die Polyepoxidverbindung bei Raumtemperatur eine feste Monomerverbindung oder ein festes Polymerharz ist, die im Mittel wenigstens 2 Epoxygruppen enthält.

14. Zusammensetzungen gemäß einem der Ansprüche 12 und 13, dadurch gekennzeichnet, daß die Polyepoxidverbindung Triglycidylisocyanurat ist.

15. Zusammensetzungen gemäß einem der Ansprüche 12 bis 14, dadurch gekennzeichnet, daß man die Polyepoxidverbindung in einer Menge von 0,7 bis 1,3, vorzugsweise von 0,95 bis 1,05 Äquivalenten Epoxygruppen pro Äquivalent Carboxylgruppen in dem Polyester mit endständigen Carboxylgruppen verwendet.

16. Zusammensetzungen gemäß einem der Ansprüche 12 bis 15, dadurch gekennzeichnet, daß sie außerdem, bezogen auf das Gewicht des Polyesters, bis zu 1 Gew.-% eines Vemetzungskatalysators, der unter den Aminen, Phosphinen, Ammoniumsalzen und Phosphoniumsalzen ausgewählt ist, vorzugsweise Ethyltriphenylphosphoniumbromid enthalten.

17. Zusammensetzungen gemäß einem der Ansprüche 12 bis 16, dadurch gekennzeichnet, daß sie, bezogen auf das Gewicht des Polyesters, bis zu 10 Gew.-% wenigstens eines Stabilisators, der unter den Ultraviolettstrahlen absorbierenden Verbindungen, den Aminen mit sterischer Hinderung, den phenolischen Antioxidantien und den Verbindungen vom Phosphonit- oder Phosphit-Typ ausgewählt ist, enthalten.

18. Verfahren zur Beschichtung eines vorzugsweise metallischen Gegenstands, dadurch gekennzeichnet, daß man auf besagtem Gegenstand eine pulverförmige warmhärtbare Zusammensetzung gemäß einem der Ansprüche 12 bis 17 durch Abscheiden mittels Spritzen mit der elektrostatischen oder triboelektrischen Pistole oder durch Abscheiden im Fließbett aufbringt und daß man die so erhaltene Beschichtung während einer Dauer von etwa 10 bis 30 Minuten bei einer Temperatur von 150 bis 200 °C aushärtet.

19. Durch das Verfahren gemäß Anspruch 18 vollständig oder teilweise beschichtete Gegenstände.

## Claims

1. Carboxyl-terminated polyesters comprising the reaction product of
(a) an aliphatic hydroxyl-terminated polyester prepared from 1,4-cyclohexanedicarboxylic acid as the sole acid component and an alcohol component comprising
(1) from 10 to 100 equivalent % of a cycloaliphatic diol and
(2) from 90 to 0 equivalent % of at least one straight or branched chain aliphatic polyol having 2 to 12 carbon atoms, with
(b) an aliphatic and/or aromatic dicarboxylic acid or the corresponding anhydride.

2. Polyesters of claim 1, characterised in that the aliphatic hydroxyl-terminated polyester (a) has a hydroxyl number of from 30 to 220 mg KOH/g and a functionality from 2 to 3.

3. Polyesters of claim 1 or 2, characterised in that the cycloaliphatic diol (1) represents from 30 to 70 equivalent % of the alcohol component.

4. Polyesters according to any of claims 1 to 3, characterised in that the cycloaliphatic diol (1) is selected from the group consisting of hydrogenated bisphenol A, 1,4-cyclohexanedimethanol, 1,4-cyclohexanediol, 2,2,4,4-tetramethyl-1,3-cyclobutanediol, 4,8-bis(hydroxymethyl)tricyclo[5.2.1.0^{2,6} ]decane and mixtures thereof.

5. Polyesters according to any of claims 1 to 4, characterised in that the aliphatic polyol (2) represents from 30 to 70 equivalent % of the alcohol component.

6. Polyesters according to any of claims 1 to 5, characterised in that the aliphatic polyol (2) is selected from the group consisting of ethylene glycol, diethylene glycol, propylene glycol, 1,4-butanediol, 1,6-hexanediol, neopentyl glycol, trimethylolpropane, ditrimethylolpropane, trimethylolethane, pentaerythritol, 1,3,5-tris(2-hydroxyethyl)-1,3,5-triazine-2,4,6(1H,3H,5H)-trione and mixtures thereof.

7. Polyesters according to any of claims 1 to 6, characterised in that the dicarboxylic acid or the corresponding anhydride (b) is selected from the group consisting of succinic acid, glutaric acid, adipic acid, pimelic acid, azelaic acid, maleic acid, fumaric acid, isophthalic acid, succinic anhydride, maleic anhydride and mixtures thereof.

8. Polyesters of claim 7, characterised in that the dicarboxylic acid (b) is adipic acid or isophthalic acid.

9. Polyesters according to any of claims 1 to 8, characterised in that they have an acid number of from 25 to 70 mg KOH/g and a functionality from 2 to 4.

10. Polyesters according to any of claims 1 to 9, characterised in that they have a number-average molecular weight between 2,000 and 10,000.

11. A process for the preparation of carboxyl-terminated polyesters of claim 1, characterised in that
(a) in a first step, a hydroxyl-terminated aliphatic polyester is prepared from 1,4-cyclohexanedicarboxylic acid and an alcohol component comprising
(1) from 10 to 100 equivalent % of a cycloaliphatic diol and
(2) from 90 to 0 equivalent % of a straight or branched chain aliphatic polyol having 2 to 12 carbon atoms, and
(b) in a second step, the hydroxyl-terminated polyester obtained in step (a) is reacted with an aliphatic and/or aromatic dicarboxylic acid or the corresponding anhydride.

12. Thermosetting powder compositions comprising
(a) the carboxyl-terminated polyester as defined in any of claims 1 to 10, and
(b) a polyepoxy compound.

13. Compositions of claim 12, characterised in that the polyepoxy compound is a solid monomer compound or a solid polymer resin at room temperature, containing on average at least two epoxy groups.

14. Compositions according to any of claims 12 to 13, characterised in that the polyepoxy compound is triglycidyl isocyanurate.

15. Compositions according to any of claims 12 to 14, characterised in that the polyepoxy compound is used in an amount of from 0.7 to 1.3, preferably from 0,95 to 1,05 equivalents of epoxy groups per equivalent of carboxyl groups in the carboxyl-terminated polyester.

16. Compositions according to any of claims 12 to 15, characterised in that they further comprise up to 1% by weight with respect to the weight of the polyester of a crosslinking catalyst selected from the group consisting of amines, phosphines, ammonium salts and phosphonium salts, preferably ethyltriphenylphosphonium bromide.

17. Compositions, according to any of claims 12 to 16, characterised in that they further comprise up to 10 % by weight with respect to the weight of the polyester of at least one stabilizer selected from the group consisting of ultraviolet light absorbing compounds, sterically hindered amines, phenolic antioxidants and phosphonite or phosphite type compounds.

18. A process for coating an article,preferably metallic characterised in that it comprises applying to said article the thermosetting powder composition according to any of claims 12 to 17, by spray coating with an electrostatic or a triboelectric gun or by coating from a fluidized bed and curing the coating thus obtained at a temperature of from 150 to 200°C for a period of about 10 to 30 minutes.

19. Articles entirely or partially coated by the process of claim 18.
